Europäisches Patentamt

European Patent Office

Office européen des brevets

(11) Veröffentlichungsnummer: **0 190 545**
**A1**

(12) # EUROPÄISCHE PATENTANMELDUNG

(21) Anmeldenummer: **85890028.5**

(22) Anmeldetag: **06.02.85**

(51) Int. Cl.⁴: **C 02 F 1/48**

(43) Veröffentlichungstag der Anmeldung:
**13.08.86 Patentblatt 86/33**

(84) Benannte Vertragsstaaten:
**BE CH DE IT LI NL SE**

(71) Anmelder: **Ortner, Peter**
**Innsbruckerstrasse 2**
**A-6100 Seefeld(AT)**

(72) Erfinder: **Eibl, Franz**
**Bundesstrasse 3**
**A-6111 Volders Tirol(AT)**

(74) Vertreter: **Torggler, Paul, Dr. et al,**
**PatentanwälteDr. Paul TorgglerDr. Engelbert**
**HofingerWilhelm-Greil-Strasse 16**
**A-6020 Innsbruck(AT)**

(54) **Vorrichtung zur Beseitigung von Kesselstein bzw. zum Verhüten von Kesselstein.**

(57) Vorrichtung zur Beseitigung von Kesselstein bzw. zum Verhüten der Bildung von Kesselstein in von einer Flüssigkeit, z.B. Wasser, durchströmten Rohrsystemen, wobei die Flüssigkeit einem von einer Spule [5] erzeugten Feld ausgesetzt wird. In einem aus zwei tellerförmigen, in ihrer Mitte eine Eintritts- und Austrittsöffnung aufweisenden Scheiben [1] bestehenden Gehäuse ist ein vorzugsweise kreissymmetrischer Innenraum ausgebildet, in dem eine von aus antimagnetischem Material bestehenden Distanzkörpern [4] gehaltene Prallplatte [3] im allseitigen Abstand von den znnenwänden der Scheiben angeordnet ist.

Fig. 1

EP 0 190 545 A1

1

Vorrichtung zur Beseitigung von Kesselstein bzw. zum Verhüten
der Bildung von Kesselstein

Die Erfindung betrifft eine Vorrichtung zur Beseitigung von Kesselstein bzw. zum Verhüten der Bildung von Kesselstein in von einer Flüssigkeit, z.B. Wasser, durchströmten Rohrsystemen, wobei die Flüssigkeit einem von einer Spule erzeugten Feld ausgesetzt wird. Derartige
Vorrichtungen sind in mehreren Ausführungsformen bereits vorgeschlagen worden, wobei grundsätzlich von der Einwirkung eines magnetischen
Kraftfeldes auf die zu behandelnde Flüssigkeit Gebrauch gemacht wird.
Um die Wirkung derartiger Vorrichtungen zu verstärken, hat man auch
schon daran gedacht, die Flüssigkeit in turbulenter Strömung durch ein
möglichst starkes Magnetfeld zu führen. Trotz der erreichten Effekte
konnte bis heute noch keine beweiskräftige Theorie aufgestellt werden.
Die bereits in der Praxis bekannten und im Handel angebotenen Geräte
weisen vielerlei schwerwiegende Nachteile auf, so z.B. erfordern sie
häufig wegen auftretender Verstopfung, insbesonders bei permanentmagnetischen Systemen, kostenaufwendige Reparaturen. Andere weisen wieder eine zu geringe Wirksamkeit auf. Ferner sind die Herstellungskosten bei einigen Geräten erheblich; hinzu kommt noch, daß vierteljährlich ein Service durchgeführt werden muß, wenn keine besonderen
Filter vorgeschaltet werden. Wie schon erwähnt, wurde bei den bekannten Geräten außer der Turbulenz der Flüssigkeit ein möglichst starkes
Magnetfeld angestrebt. Um aber höchste Effekte zu erzielen, haben
praktische Experimente ergeben, daß die magnetische Feldstärke der
Durchflußmenge der zu behandelnden Flüssigkeit angepaßt werden muß.
Bei einfachen Versuchsgeräten hat sich gezeigt, daß bei geringer
Durchflußmenge und hoher magnetischer Feldstärke trotzdem nur geringe Effekte erzielt wurden.

Es wurde nun erkannt, daß die erforderliche magnetische Feldstärke
durch eine bestimmte Abstufung des Spaltes zwischen einem Magnetteller
und einer Prallplatte, auf die die behandelte Flüssigkeit auftrifft,
erheblich verbessert werden kann. Ausgehend von einer Vorrichtung
der eingangs genannten Art wird gemäß der Erfindung zunächst vorgeschlagen, daß in einem aus zwei tellerförmigen, in ihrer Mitte eine Eintritts- bzw. Austrittsöffnung aufweisenden Scheiben bestehenden Gehäuse ein vorzugsweise kreissymmetrischer Innenraum ausgebildet ist, in dem eine von aus antimagnetischem Material bestehenden Distanzkörpern gehaltene Prallplatte im allseitigen Abstand von den Innenwänden der Scheiben angeordnet ist. Hierbei kann die das Feld erzeugende Spule konzentrisch zur Prallplatte, diese in deren Hauptebene umschließend, angeordnet sein, wobei der Innenraum des Gehäuses, an den Innenwänden der tellerförmigen Scheiben konzentrisch verlaufend, kreisförmige Abstufungen aufweist.

Nachstehend wird anhand der Zeichnungen ein Ausführungsbeispiel der erfindungsgemäßen Vorrichtung näher erläutert, in der Fig. 1 einen Axialschnitt und Fig. 2 eine Draufsicht auf die Vorrichtung zeigt. Fig. 3 ist die schematische Darstellung der Wirkungsweise der erfindungsgemäßen Vorrichtung.

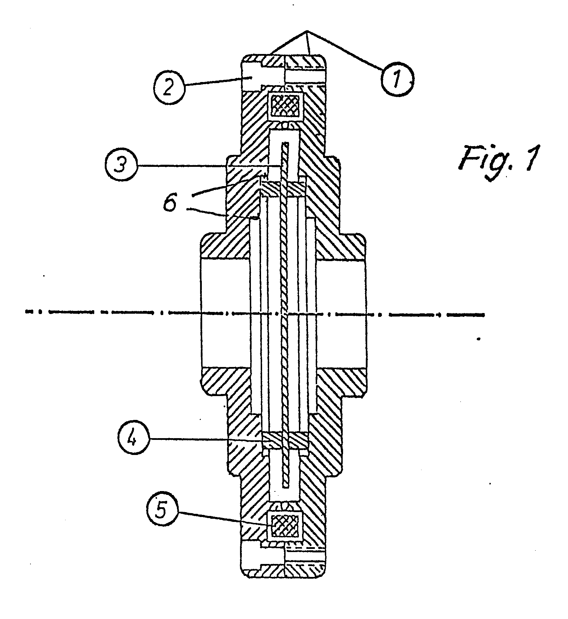

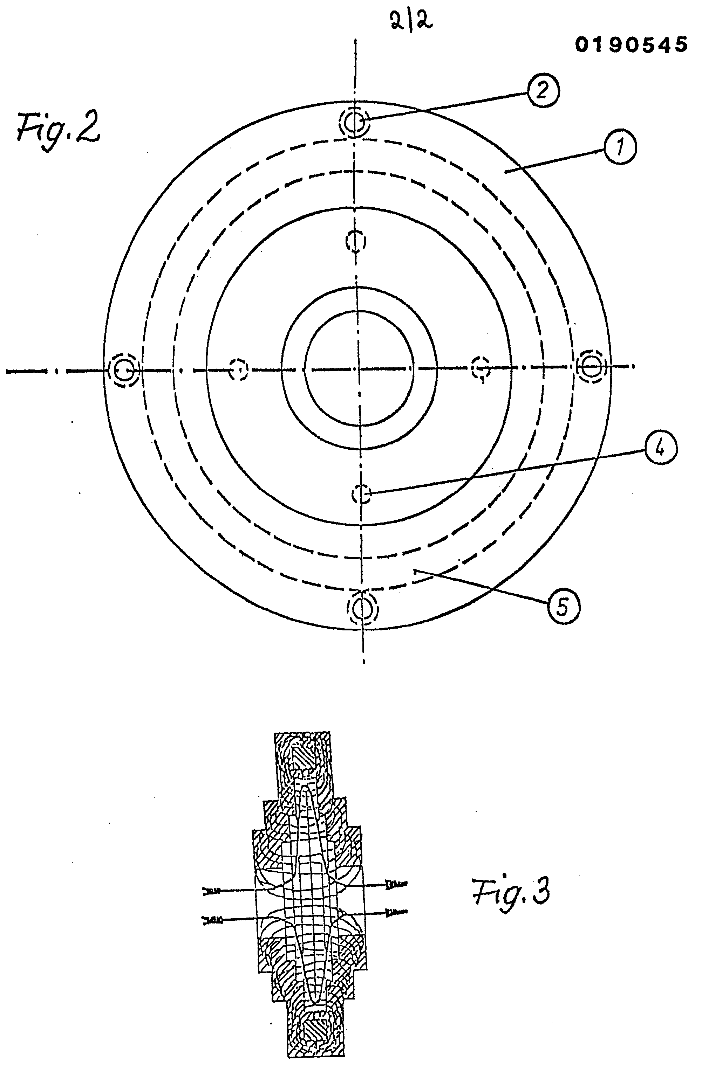

Die Vorrichtung gemäß Fig. 1 weist zwei tellerförmige, in ihrer Mitte eine Eintritts- bzw. Austrittsöffnung aufweisende Scheiben 1 aus magnetisierbarem Material auf, die mittels Schrauben 2 dicht miteinander verflanscht sind. Eine zur Ein- und Austrittsöffnung konzentrische, zwischen diesen angeordnete Prallplatte 3, die vorzugsweise ebenfalls aus magnetisierbarem Material besteht, wird in der Hauptebene der Vorrichtung mittels Distanzkörpern 4 gehalten, die aus antimagnetischem Material bestehen und bei der dargestellten Ausführungsform gemäß Fig. 2 als um 90° entlang des Umfangs der Prallplatte 3 gegeneinander versetzte Zylinderstifte ausgebildet sind.

Bei eingeschaltetem Strom wird mittels der die Prallplatte umgebenden Spule 5 ein Kraftfeld erzeugt, wie in Fig. 3 angedeutet ist. Der Wasserstrom durchsetzt die Vorrichtung indem er im Innenraum auf die Prallplatte 3 auftrifft und sich gleichmäßig zum äußeren Umfang dieser Platte verteilt. Er umströmt den Rand der Platte und gelangt schließlich zur Austrittsstelle.

Die das Feld erzeugende Spule ist konzentrisch zur Prallplatte angeordnet und umschließt diese in deren Hauptebene.

3

Wie aus Fig. 1 deutlich zu entnehmen ist, weist der Innenraum des Gehäuses kreisförmige und konzentrisch zu der Eintritts- und Austrittsöffnung verlaufende Abstufungen 6 auf, wodurch sich verschiedene magnetische Feldstärken ergeben. Durch entsprechende Abmessungen der Abstufungen kann man somit die Feldstärke den Erfordernissen anpassen.

Von Wichtigkeit ist schließlich, daß durch die Gestaltung der Innenwände der Vorrichtung nur eine vernachlässigbare kleine Druckverminderung im Gerät auftritt.

— | —

Firma EIBL Gerätebau OHG
Vill Tirol/Österreich

Vorrichtung zur Beseitigung von Kesselstein bzw. zum Verhüten
der Bildung von Kesselstein

## Ansprüche

1. Vorrichtung zur Beseitigung von Kesselstein bzw. zum Verhüten der
Bildung von Kesselstein in von einer Flüssigkeit, z.B. Wasser, durchströmten Rohrsystemen, wobei die Flüssigkeit einem von einer Spule
erzeugten Feld ausgesetzt wird, dadurch gekennzeichnet, daß in einem
aus zwei tellerförmigen, in ihrer Mitte eine Eintritts- bzw. Austrittsöffnung aufweisenden Scheiben (1) bestehenden Gehäuse ein vorzugsweise kreissymmetrischer Innenraum ausgebildet ist, in dem eine
von aus antimagnetischem Material bestehenden Distanzkörpern (4) gehaltene Prallplatte (3) im allseitigen Abstand von den Innenwänden der
Scheiben angeordnet ist.

2. Vorrichtung nach Anspruch 1, dadurch gekennzeichnet, daß die das Feld
erzeugende Spule (5) konzentrisch zur Prallplatte (3), diese in deren
Hauptebene umschließend, angeordnet ist.

I/p                                                                    -2-

3. Vorrichtung nach Anspruch 1 oder 2, dadurch gekennzeichnet, daß der Innnenraum des Gehäuses, an den Innenwänden der tellerförmigen Scheibe konzentrisch verlaufend, kreisförmige Abstufungen aufweist.

1|2

Fig. 1

0190545

Fig.2

Fig.3

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | BE-A- 461 600 (M. VANDERBORGHT) * Seite 3, Absatz 3 - Seite 4, Absatz 1 * | 1-3 | C 02 F  .1/48 |
| Y | WO-A-8 404 294 (B. LAM et al.) * Figur 1 * | 1-3 | |
| A | US-A-4 288 323 (M.E. BRIGANTE) * Insgesamt * | 1-3 | |
| A | DE-B-1 218 963 (O. FJELDSEND) * Insgesamt * | 1-3 | |
| A | FR-A-1 387 016 (A. BARBIER) * Insgesamt * | 1-3 | RECHERCHIERTE SACHGEBIETE (Int. Cl.4) C 02 F |

Der vorliegende Recherchenbericht wurde für alle Patentansprüche erstellt.

| Recherchenort DEN HAAG | Abschlußdatum der Recherche 20-09-1985 | Prüfer VAN AKOLEYEN H.T.M. |
|---|---|---|